# EUROPEAN PATENT APPLICATION

(11) **EP 4 485 744 A1**
(43) Date of publication of application: **01.01.2025**
(21) Application number: 23795139.7
(22) Date of filing: 19.04.2023
(51) Int. Cl.: H02J 7/00, H02J 50/10, H02M 3/156

(54) **CHARGING CIRCUIT AND ELECTRONIC DEVICE**

(30) Priority: 27.04.2022 CN 202210452308
(71) Applicant: Huawei Technologies Co., Ltd., Shenzhen, Guangdong 518129 (CN)
(72) Inventor: GUO, Xin, Shenzhen, Guangdong 518129 (CN); ZHOU, Xiaofeng, Shenzhen, Guangdong 518129 (CN); GAO, Yang, Shenzhen, Guangdong 518129 (CN); XU, Meng, Shenzhen, Guangdong 518129 (CN); WANG, Yukai, Shenzhen, Guangdong 518129 (CN)
(74) Representative: Pfenning, Meinig & Partner mbB
(86) International application number: PCT/CN2023/089212
(87) International publication number: WO 2023/207706

(57) **Abstract**

A charging circuit and an electronic device relate to the field of electronic technologies, and can increase a power of high-power fast charging. The charging circuit includes: at least two direct current-direct current DC-DC conversion circuits coupled between a power supply end and a charging end. The power supply end is configured to be coupled to a charger, and the charging end is configured to be coupled to a battery. A voltage input end of the DC-DC conversion circuit is coupled to the power supply end, and a voltage output end of the DC-DC conversion circuit is coupled to the charging end. The at least two DC-DC conversion circuits include a first DC-DC conversion circuit and a second DC-DC conversion circuit. The first DC-DC conversion circuit is configured to perform voltage conversion on a voltage at the power supply end, to output a first charging signal to the battery. The second DC-DC conversion circuit is configured to perform voltage conversion on the voltage at the power supply end, to output a second charging signal to the battery. The first DC-DC conversion circuit includes a voltage regulated direct current conversion circuit, and the second DC-DC conversion circuit includes a voltage non-regulated direct current conversion circuit.

## Description

This application claims priority to Chinese Patent Application No. 202210452308.4, filed with the China National Intellectual Property Administration on April 27, 2022 and entitled "CHARGING CIRCUIT AND ELECTRONIC DEVICE", which is incorporated herein by reference in its entirety.

### TECHNICAL FIELD

Embodiments of this application relate to the field of electronic technologies, and in particular, to a charging circuit and an electronic device.

### BACKGROUND

A charging circuit is widely used in an electronic device such as a mobile phone, a watch, or a tablet computer, to convert a voltage that is output by a power adapter (charger) or a wireless charging circuit, and then provide a charging voltage to a battery of the electronic device or directly provide a system voltage to another load circuit of the electronic device. Usually, according to different charging protocols, the charging circuit mainly uses a voltage conversion circuit such as a buck (BUCK) circuit or a switched capacitor (switched capacitor converter, SC) to implement a conversion ratio of an input voltage to an output voltage.

Currently, in a normal charging scenario, a BUCK circuit applicable to low-power charging is used, so that flexibility of a voltage conversion ratio during charging is improved. In a fast charging scenario, to ensure charging efficiency, an SC circuit applicable to high-power charging is used. In this way, based on different charging application scenarios, the BUCK circuit or the SC may be selectively controlled to charge the battery. For example, a mainstream solution is: when it is detected, according to a power deliver (power deliver, PD) charging protocol, that the charger supports normal charging, controlling the BUCK circuit to implement the conversion ratio of the input voltage to the output voltage; or when it is detected, according to a super charge protocol (super charge protocol, SCP), that the charger supports fast charging, controlling the SC circuit to implement the conversion ratio of the input voltage to the output voltage.

In this way, in the fast charging scenario, a power (or current, where the charging voltage of the battery is limited by a rated voltage of the battery, and is usually fixed at about 5 V, so that the power that is output by the charging circuit is mainly in a direct ratio to the current) provided by the charging circuit is limited by a power (or current) upper limit of the SC. How to further increase a power (or current) of high-power fast charging becomes an urgent problem to be resolved.

### SUMMARY

Embodiments of this application provide a charging circuit and an electronic device, to increase a power of high-power fast charging.

According to a first aspect, a charging circuit is provided. The charging circuit includes: at least two direct current-direct current DC-DC conversion circuits coupled between a power supply end and a charging end. The power supply end is configured to be coupled to a charger, and the charging end is configured to be coupled to a battery. A voltage input end of the DC-DC conversion circuit is coupled to the power supply end, and a voltage output end of the DC-DC conversion circuit is coupled to the charging end. The at least two DC-DC conversion circuits include a first DC-DC conversion circuit and a second DC-DC conversion circuit. The first DC-DC conversion circuit is configured to perform voltage conversion on a voltage at the power supply end, to output a first charging signal to the battery. The second DC-DC conversion circuit is configured to perform voltage conversion on the voltage at the power supply end, to output a second charging signal to the battery. The first DC-DC conversion circuit includes a voltage regulated direct current conversion circuit, and the second DC-DC conversion circuit includes a voltage non-regulated direct current conversion circuit. In this way, the at least two DC-DC conversion circuits that are in the charging circuit and that are coupled between the power supply end VBUS and the charging end Vbat include one voltage non-regulated direct current conversion circuit and one voltage regulated direct current conversion circuit. For example, a first DC-DC conversion circuit includes a voltage regulated direct current conversion circuit, and a second DC-DC conversion circuit includes a voltage non-regulated direct current conversion circuit. In addition, the power supply end VBUS is configured to be coupled to the charger, and the charging end Vbat is configured to be coupled to the battery. In this way, in a case, the first DC-DC conversion circuit performs voltage conversion on the voltage at the power supply end VBUS, to output the first charging signal to the battery; and the second DC-DC conversion circuit performs voltage conversion on the voltage at the power supply end, to output the second charging signal to the battery. Therefore, with reference to the foregoing process, the first DC-DC conversion circuit and the second DC-DC conversion circuit may simultaneously charge the battery in a first charging mode (for example, fast charging). Compared with a conventional technology in which only one of a BUCK circuit or an SC circuit is used to charge the battery in a charging scenario, the solution provided in this embodiment of this application may simultaneously use, in a fast charging scenario, two DC-DC conversion circuits to charge the battery, so that a power of high-power fast charging can be increased.

In a possible implementation, the first DC-DC conversion circuit in the at least two DC-DC conversion circuits is configured to output the first charging signal to the battery, and the second DC-DC conversion circuit is configured to stop performing voltage conversion on the voltage at the power supply end. In this possible implementation, one of the at least two DC-DC conversion circuits may alternatively be used to charge the battery. For example, in a second charging mode, the first DC-DC conversion circuit in the at least two DC-DC conversion circuits is configured to output the first charging signal to the battery.

In a possible implementation, to implement control on the DC-DC conversion circuits, the charging circuit further includes a first protocol chip, where the first protocol chip is coupled to a controller, and the at least two direct current-direct current DC-DC conversion circuits are further coupled to the controller. When the first protocol chip is coupled to the charger, the controller is specifically configured to: when the first protocol chip determines that the charger supports the first charging mode, control the first DC-DC conversion circuit to output the first charging signal to the battery, and control the second DC-DC conversion circuit to output the second charging signal to the battery.

In a possible implementation, to save an external analog device (for example, a logic circuit such as an MCU), the first protocol chip and the second DC-DC conversion circuit are integrated into a same chip.

In a possible implementation, the first protocol chip is configured to negotiate with the charger according to an SCP charging protocol, to determine that the charger supports the first charging mode.

In a possible implementation, to implement control on the DC-DC conversion circuits, the charging circuit further includes a second protocol chip, where the second protocol chip is configured to be coupled to a controller, and the at least two direct current-direct current DC-DC conversion circuits are further coupled to the controller. When the second protocol chip is coupled to the charger, the control circuit is specifically configured to: when the second protocol chip determines that the charger supports the second charging mode, control the first DC-DC conversion circuit to output the first charging signal to the battery, and control the second DC-DC conversion circuit to stop performing voltage conversion on the voltage at the power supply end.

In a possible implementation, to save an external analog device (for example, a logic circuit such as an MCU), the second protocol chip and the first DC-DC conversion circuit are integrated into a same chip.

In a possible implementation, the second protocol chip is configured to negotiate with the charger according to a PD charging protocol, to determine that the charger supports the second charging mode.

In a possible implementation, the at least two DC-DC conversion circuits further include a third DC-DC conversion circuit, where the third DC-DC conversion circuit is configured to perform voltage conversion on the voltage at the power supply end, to output a third charging signal to the battery; and the third DC-DC conversion circuit includes a voltage non-regulated direct current conversion circuit. In this way, in the first charging mode, three DC-DC conversion circuits are simultaneously reused to charge the battery, so that an output of a higher power can be implemented.

In a possible implementation, the voltage regulated direct current conversion circuit includes at least any one of the following: a buck-boost BUCK-BOOST circuit, a buck BUCK circuit, and a boost BOOST circuit.

In a possible implementation, the voltage non-regulated direct current conversion circuit includes a switched capacitor SC circuit.

In a possible implementation, to avoid supplying a voltage to a DC-DC conversion circuit that does not work, the charging circuit further includes: a plurality of control switches, where the control switch is connected in series between the power supply end and the DC-DC conversion circuit. A control switch connected in series to the power supply end and the first DC-DC conversion circuit is configured to be in an on state, and a control switch connected in series to the power supply end and the second DC-DC conversion circuit is configured to be in an on state. Alternatively, a control switch connected in series to the power supply end and the first DC-DC conversion circuit is configured to be in an on state, and a control switch connected in series to the power supply end and the second DC-DC conversion circuit is configured to be in an off state.

According to a second aspect, a chip is provided. The chip includes the charging circuit according to any one of the first aspect or the possible implementations of the first aspect, and the chip further includes a pin configured to couple a charger and a battery. For technical effects implemented in the second aspect, refer to the descriptions in the first aspect or any possible implementation. Details are not described herein again.

In a possible implementation, the chip includes a charging management module.

According to a third aspect, an electronic device is provided, including the charging circuit according to any one of the first aspect or the possible implementations of the first aspect or the chip provided in the second aspect. For technical effects implemented in the third aspect, refer to the descriptions in the first aspect or any possible implementation. Details are not described herein again.

In a possible implementation, the electronic device further includes a wireless charging coil, a receiving circuit, and a battery. The wireless charging coil is connected to the receiving circuit, the receiving circuit is connected to a power supply end of the charging circuit or the chip, and the battery is connected to a charging end of the charging circuit or the chip. In this way, a wireless charging manner is implemented.

In a possible implementation, the electronic device further includes a USB interface and a battery. The USB interface is connected to a power supply end of the charging circuit or the chip, and the battery is connected to a charging end of the charging circuit or the chip. In this way, a wired charging manner is implemented.

In a possible implementation, the electronic device further includes an overvoltage protection circuit. The overvoltage protection circuit includes a diode and a protection switch, where an anode of the diode is coupled to the ground, a cathode of the diode is coupled to the power supply end, and the protection switch is connected in series between the power supply end and the ground. In this way, because the diode is reversely connected between the power supply end and the ground, when the protection switch is turned off, a voltage at the anode of the diode increases. If the voltage at the anode of the diode is higher than a voltage at the cathode, the diode is turned on, and the excessively high voltage is released, thereby playing a role of overvoltage protection.

In a possible implementation, the electronic device further includes a load circuit; and a first DC-DC conversion circuit further includes an isolation switch, where a voltage output end of the first DC-DC conversion circuit is coupled to the load circuit, and the isolation switch is further disposed between the voltage output end of the first DC-DC conversion circuit and the charging end. In this scenario, the voltage output end of the first DC-DC conversion circuit is directly connected to a system load (load circuit), and the voltage output end of the first DC-DC conversion circuit is connected to the battery by using the isolation switch. In this way, in this scenario, the first DC-DC conversion circuit may directly supply power to the system load, and may directly charge the battery when the isolation switch is turned on. In addition, when there is no external power supply, the system load may be powered by the battery when the isolation switch is turned on.

### BRIEF DESCRIPTION OF DRAWINGS

FIG. 1 is a schematic of a structure of an electronic device according to an embodiment of this application;
FIG. 2 is a schematic of a connection relationship of a charging circuit according to an embodiment of this application;
FIG. 3 is a schematic of pin distribution of a USB interface according to an embodiment of this application;
FIG. 4 is a schematic of a structure of a charging circuit according to an embodiment of this application;
FIG. 5 is a schematic of a structure of a BUCK circuit according to an embodiment of this application;
FIG. 6 is a schematic of a structure of an SC circuit according to an embodiment of this application;
FIG. 7 is a schematic of a structure of a charging circuit according to another embodiment of this application;
FIG. 8 is a schematic of a structure of a charging circuit according to still another embodiment of this application;
FIG. 9 is a schematic of a structure of a charging circuit according to yet another embodiment of this application;
FIG. 10 is a schematic of a structure of a charging circuit according to another embodiment of this application;
FIG. 11 is a schematic of a structure of a charging circuit according to still another embodiment of this application; and
FIG. 12 is a schematic of a structure of a charging circuit according to yet another embodiment of this application.

### DESCRIPTION OF EMBODIMENTS

Unless otherwise required by the context, throughout this specification and claims, the term "comprise (comprise)" and other forms thereof such as a third person singular form "comprises (comprises)" and a present participle form "comprising (comprising)" are interpreted as "open and inclusive", that is, "comprise, but not limited to". In the descriptions of this specification, the terms such as "one embodiment (one embodiment)", "some embodiments (some embodiments)", "example embodiments (example embodiments)", "an example (example)", "a specific example (specific example)", or "some examples (some examples)" are intended to indicate that a specific feature, structure, material, or characteristic related to the embodiment or example is included in at least one embodiment or example of this application. The schematic representations of the foregoing terms do not necessarily indicate a same embodiment or example. In addition, the specific feature, structure, material, or characteristic may be included in any one or more embodiments or examples in any appropriate manner.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more.

When used to describe a three-port switch (also referred to as a switching device, such as a switching tube, a switch transistor, or a protection switch, an isolation switch, and a control switch in this application), a "first end" and a "second end" may respectively indicate connection ends of the switch, but a "control end" may indicate a control end of the switch. For example, for a MOS (metal-oxide-semiconductor, metal-oxide-semiconductor) transistor, the control end may be a gate (gate) of the MOS transistor, the first end may be a source (source) of the MOS transistor, and the second end may be a drain (drain) of the MOS transistor. Alternatively, the first end may be a drain of the MOS transistor, and the second end may be a source of the MOS transistor. In embodiments of this application, each switch may include one switching transistor. However, to minimize an internal resistance increase caused by a switch connected in series to a line, each switch may alternatively include two or more switching transistors connected in parallel.

The following describes technical solutions of this application with reference to accompanying drawings.

A charging circuit provided in embodiments of this application may be used in an electronic device that needs to charge a battery, such as a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device. This is not limited in embodiments of this application.

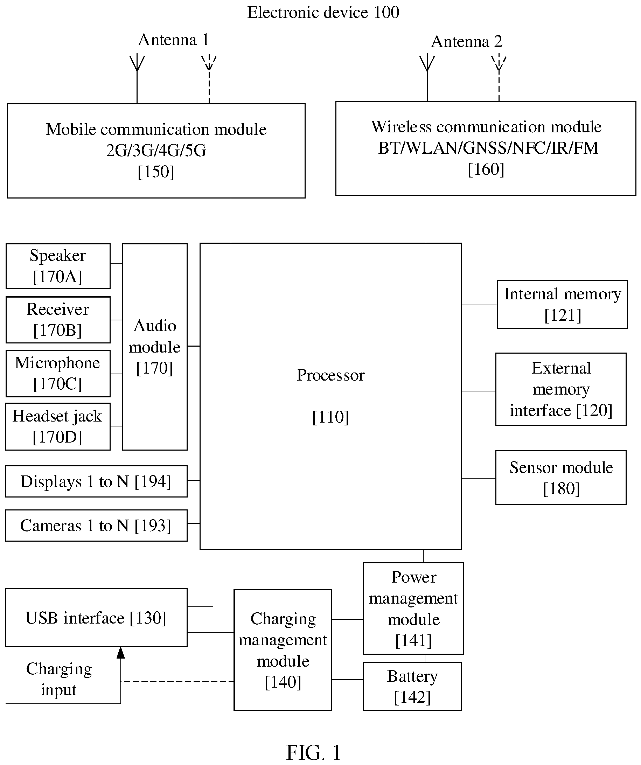

For example, FIG. 1 is a schematic of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 193, a display 194, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

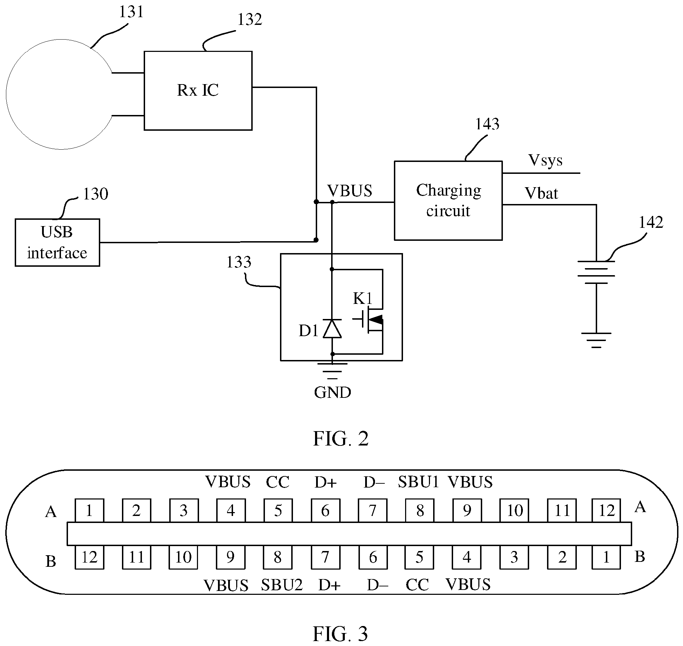

The charging management module 140 is configured to receive a charging input from a charger. The charger may be a wireless charger or a wired charger (or an adapter). In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. When charging the battery 142, the charging management module 140 may further supply power to a load circuit of the electronic device by using the power management module 141. Specifically, with reference to FIG. 1, the charging management module 140 is connected to the USB interface 130. To implement normal charging or fast charging of the battery, with reference to FIG. 2, the charging management module 140 may include a charging circuit 143 configured to charge the battery, where a power supply end VBUS of the charging circuit 143 is connected to the USB interface 130, and a charging end Vbat of the charging circuit 143 is connected to the battery 142. For another example, in some embodiments of wireless charging, with reference to FIG. 2, the power supply end VBUS of the charging circuit 143 is specifically connected to the wireless charging coil 131 by using a receiving circuit (receive integrated circuit, Rx IC) 132. The processor 110 or the charging management module 140 may control, according to a charging protocol, the charging circuit 143 to convert a voltage at the power supply end VBUS into a voltage Vbat near a battery voltage (usually 5 V), and then charge the battery. As shown in FIG. 2, the charging circuit 143 further includes a system voltage end Vsys that is configured to provide a voltage to the load circuit. In addition, as shown in FIG. 2, the electronic device further includes an overvoltage protection circuit 133. The overvoltage protection circuit 133 includes a diode D1 and a protection switch K1, where an anode of the diode D1 is coupled to the ground GND, a cathode of the diode D1 is coupled to the power supply end VBUS, and the protection switch K1 is connected in series between the power supply end VBUS and the ground GND. In this way, because the diode D1 is reversely connected between the power supply end VBUS and the ground GND, when the protection switch K1 is turned off, a voltage at the anode of the diode D1 increases. If the voltage at the anode of the diode D1 is higher than a voltage at the cathode, D1 is turned on, and the excessively high voltage is released, thereby playing a role of overvoltage protection. It should be noted that a control end of the protection switch K1 may be connected to the processor 110 or the power management module 141, to control the protection switch K1 to be in the foregoing off state, thereby implementing an overvoltage protection function. It should be noted that, to enable the electronic device to be usually coupled to an external device (for example, a charger, an analog headset, a digital headset, a mobile storage device, or a mobile terminal) through the USB interface 130, the USB interface 130 may be a Type-C interface. As shown in FIG. 3, a side A and a side B of the Type-C interface each include two symmetrically disposed VBUS pins (configured to provide a USB voltage, a pin 4 and a pin 9), a CC pin (a pin 5), a D+ pin (a pin 6 on the side A and a pin 7 on the side B), a D- pin (a pin 7 on the side A and a pin 6 on the side B), and an SBU pin (a pin 8 is a spare pin, marked as SBU1 on the side A and SBU2 on the side B). Usually, the power supply end of the charging circuit 143 is coupled to the VBUS pin. When being connected to an external charger through the USB interface 130, the electronic device may negotiate a charging voltage with the charger based on pins such as the CC pin, the D+ pin, and the D- pin according to a charging protocol. For example, for a charger that supports a power deliver (power deliver, PD) charging protocol, a charging parameter is negotiated by using the CC pin. For a charger that supports a super charge protocol (super charge protocol, SCP), a charging parameter is negotiated by using the D+ pin and the D-pin. Certainly, for an electronic device that supports wireless charging, a charging parameter may be negotiated with the charger by using the Rx IC 132 and the wireless charging coil 131 according to the charging protocol. In the following example, the charging circuit 143 is described in detail mainly with reference to an example in which the charger is connected through the USB interface 130.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. The mobile communication module 150 may provide a solution, applied to the electronic device 100, to wireless communication including 2G/3G/4G/5G, and the like. In some embodiments, at least some functional modules of the mobile communication module 150 may be disposed in the processor 110. In some embodiments, at least some functional modules of the mobile communication module 150 may be disposed in a same device as at least some modules of the processor 110. The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like.

The electronic device 100 may implement a photographing function by using the ISP, the camera 193, the video codec, the GPU, the display 194, the application processor, and the like.

The camera 193 is configured to capture a static image or a video.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store one or more computer programs. The one or more computer programs include instructions. The processor 110 may run the instructions stored in the internal memory 121, so that the electronic device 100 performs a method provided in some embodiments of this application, various functional applications, data processing, and the like.

The electronic device 100 may implement an audio function such as music playing or recording by using the audio module 170, the speaker 170A, the receiver 170B, the microphone 170C, the headset jack 170D, the application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In addition, the electronic device may further include one or more components such as a button 190, a motor 191, an indicator 192, and a subscriber identification module (subscriber identification module, SIM) card interface 195. This is not limited in this embodiment of this application.

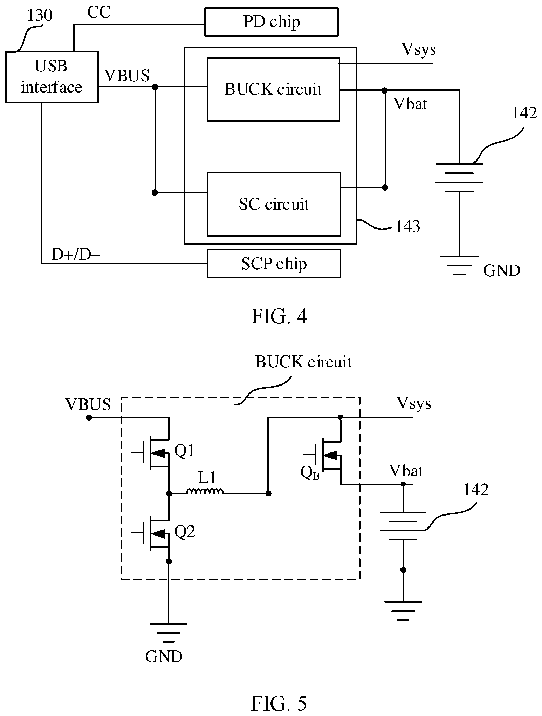

With reference to FIG. 4, the charging circuit 143 shown in FIG. 2 usually includes a BUCK circuit and an SC circuit. FIG. 4 is a schematic of a connection manner of the BUCK circuit and the SC circuit. A voltage output end of the BUCK circuit is coupled to a load circuit Vsys. As shown in FIG. 5, the BUCK circuit includes an inductor L1 and a switch circuit that includes switches Q1 and Q2. The BUCK circuit is connected between VBUS and Vsys, a first end of Q1 is coupled to VBUS, and a second end of Q1 is coupled to a first end of Q2. The first end of Q2 is coupled to a first end of the inductor L1, and a second end of Q2 is coupled to the ground GND. A second end of the inductor L1 is coupled to Vsys. Q1 and Q2 form a buck bridge of the BUCK circuit. When the BUCK circuit is in a buck state, on and off states of Q1 and Q2 are complementary, and an on/off duty cycle D_{BUCK} of Q1 and Q2 is adjusted to implement buck outputs of different ratios. In addition, to charge the battery, the BUCK circuit further includes an isolation switch Q_{B}. The voltage output end (Vsys) of the BUCK circuit is connected to a charging end (Vbat) by using the isolation switch Q_{B}. In this way, the BUCK circuit may directly supply power to the load circuit of the system, and may directly charge the battery 142 when Q_{B} is turned on. In addition, when the electronic device is not connected to an external charger, Q_{B} may alternatively be turned on, to supply power to the load circuit by using the battery 142.

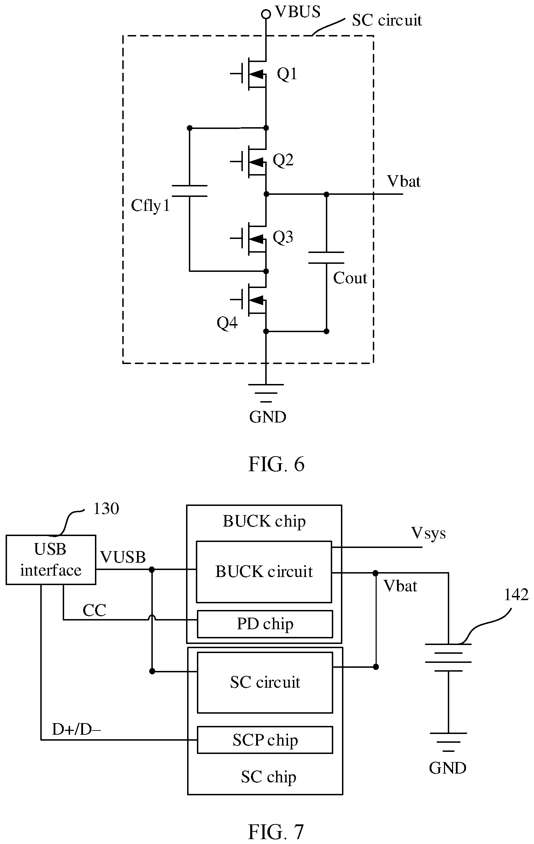

In some other examples, as shown in FIG. 6, the SC circuit includes a flying capacitor Cfly 1, an output capacitor Cout, and a switch circuit that includes switches Q1 to Q4. A first end of Q1 is coupled to VBUS, a second end of Q1 is coupled to a first end of Q2, a second end of Q2 is coupled to a first end of Q3, a second end of Q3 is coupled to a first end of Q4, and a second end of Q4 is coupled to the ground GND. A first end of the flying capacitor Cfly 1 is coupled to the first end of Q2, and a second end of Cfly 1 is coupled to the first end of Q4. A first end of the output capacitor Cout is coupled to the first end of Q3, and a second end of Cout is coupled to the ground GND. The first end of the output capacitor Cout is connected to a charging end Vbat. The SC circuit may convert a voltage that is input by VBUS into a voltage at Vbat at a fixed ratio, and charge the battery. The SC circuit shown in FIG. 6 is used as an example. Both Q1 and Q3 are turned on, and both Q2 and Q4 are turned on. Control signals of Q1 and Q3 and control signals of Q2 and Q4 are complementary. In this way, in a period of time of a cycle, Q1 and Q3 are turned on, and Q2 and Q4 are turned off. In this way, Cfly 1 and Cout are connected in series between V1 and GND, and a voltage that is input by V1 simultaneously charges Cfly1 and Cout. In another period of time of a cycle, Q1 and Q3 are turned off, Q2 and Q4 are turned on, Cfly1 is connected in parallel to Cout, and Cfly1 discharges to Cout. In this way, 2:1 buck conversion is formed. Certainly, in FIG. 6, an SC circuit that implements 2:1 buck conversion is merely used as an example. It may be understood that 3:1 buck conversion, 4:1 buck conversion, or the like may be implemented by using an SC circuit in another form.

As shown in FIG. 5 and FIG. 6, it may be learned that the BUCK circuit used by the charging circuit 143 includes the inductor L1, the inductor L1 is used as an energy storage element, energy density of the inductor is usually low, and energy consumed on the inductor increases as charging power of the battery 142 increases. Therefore, a loss of the charging circuit 143 is increased. However, because the SC circuit does not include a power device, efficiency is improved compared with that of the BUCK. However, a conversion ratio of an input voltage to an output voltage of the SC circuit is limited, and is usually limited by a quantity of capacitors. A conversion ratio implemented by the SC circuit is relatively fixed, for example, (a conversion ratio such as 2:1, 3:1, or 4:1), and the voltage change ratio cannot be freely adjusted. Based on the foregoing reasons, in a normal charging scenario, a BUCK circuit applicable to low-power charging is usually used, so that flexibility of a voltage conversion ratio during charging is improved. In a fast charging scenario, to ensure charging efficiency, an SC circuit applicable to high-power charging is used. In this way, based on different charging application scenarios, the BUCK circuit or the SC circuit may be selectively controlled to charge the battery. For example, with reference to FIG. 4, a mainstream solution is that the electronic device further includes a PD chip and an SCP chip that are configured to implement charging protocol detection, where the PD chip is connected to a CC pin of the USB interface 130, and the SCP chip is connected to a D+/D-pin of the USB interface 130. When a charger is inserted into the USB interface 130, if the PD chip detects (according to a PD charging protocol) that the charger supports normal charging, the BUCK circuit is controlled to implement the conversion ratio of the input voltage and the output voltage; or if the SCP chip detects (according to an SCP charging protocol) that the charger supports fast charging, the SC circuit is controlled to implement the conversion ratio of the input voltage and the output voltage. It should be noted that the PD chip and the SCP chip each may be a logic circuit such as a processor or an MCU that is separately disposed, or may be integrated into the processor 110 or the power management module 141 shown in FIG. 1 for implementation. Certainly, to save an external analog device (for example, a logic circuit such as an MCU), as shown in FIG. 7, the BUCK circuit and the PD chip may alternatively be integrated into a same BUCK chip, and/or the SC circuit and the SCP chip may alternatively be integrated into a same SC chip.

In this way, in a fast charging scenario, a power (or current) provided by the charging circuit is limited by a power (or current) upper limit of the SC. How to further increase a power (or current) of high-power fast charging becomes an urgent problem to be resolved.

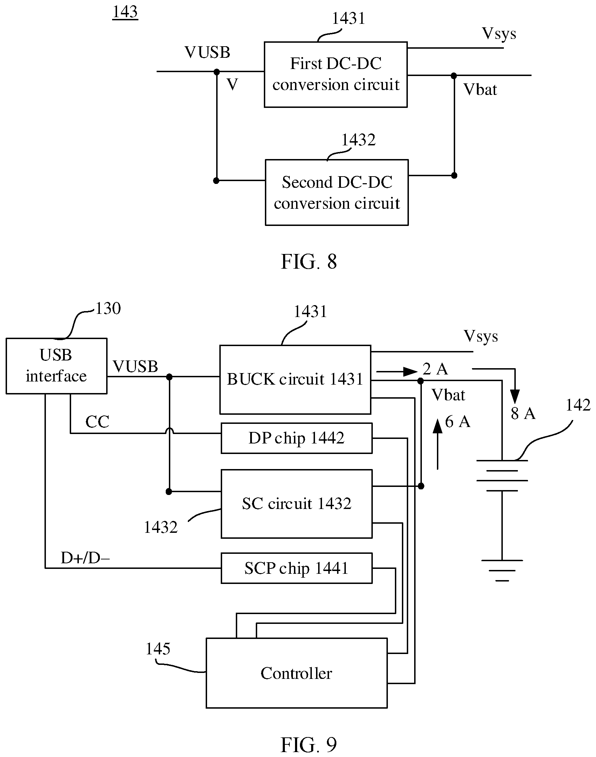

To further increase the power of high-power fast charging, based on the foregoing electronic device, an embodiment of this application provides a charging circuit. With reference to FIG. 8, the charging circuit includes at least two direct current-direct current DC-DC conversion circuits 143 (a first DC-DC conversion circuit 1431 and a second DC-DC conversion circuit 1432 shown in FIG. 8) coupled between a power supply end VBUS and a charging end Vbat. The power supply end VBUS is configured to be coupled to a charger, and the charging end Vbat is configured to be coupled to a battery 142 (as shown in FIG. 2). A voltage input end of the DC-DC conversion circuit 143 (1431, 1432) is coupled to the power supply end VBUS, and a voltage output end of the DC-DC conversion circuit 143 (1431, 1432) is coupled to the charging end Vbat. The at least two DC-DC conversion circuits 143 (1431, 1432) include a first DC-DC conversion circuit 1431, and a second DC-DC conversion circuit 1432. The first DC-DC conversion circuit 1431 is configured to perform voltage conversion on a voltage at the power supply end VBUS, to output a first charging signal to the battery 142. The second DC-DC conversion circuit 1432 is configured to perform voltage conversion on the voltage at the power supply end, to output a second charging signal to the battery 142. The first DC-DC conversion circuit 1431 includes a voltage regulated direct current conversion circuit, and the second DC-DC conversion circuit 1432 includes a voltage non-regulated direct current conversion circuit. The voltage regulated direct current conversion circuit includes at least any one of the following: a buck-boost BUCK-BOOST circuit, a buck BUCK circuit, and a boost BOOST circuit. The voltage non-regulated direct current conversion circuit includes a switched capacitor SC circuit. It should be noted that, as shown in FIG. 8, when the first DC-DC conversion circuit 1431 includes a voltage regulated direct current conversion circuit such as a buck-boost BUCK-BOOST circuit, a buck BUCK circuit, or a boost BOOST circuit, the first DC-DC conversion circuit 1431 further includes a system voltage end Vsys that is connected to a load circuit. For a specific function and a connection manner, refer to the foregoing descriptions for FIG. 4. Details are not described again.

In this way, the at least two DC-DC conversion circuits that are in the charging circuit and that are coupled between the power supply end VBUS and the charging end Vbat include one voltage non-regulated direct current conversion circuit and one voltage regulated direct current conversion circuit. For example, the first DC-DC conversion circuit includes a voltage regulated direct current conversion circuit, and the second DC-DC conversion circuit includes a voltage non-regulated direct current conversion circuit. In addition, the power supply end VBUS is configured to be coupled to the charger, and the charging end Vbat is configured to be coupled to the battery. In this way, in a case, the first DC-DC conversion circuit performs voltage conversion on the voltage at the power supply end VBUS, to output the first charging signal to the battery; and the second DC-DC conversion circuit performs voltage conversion on the voltage at the power supply end, to output the second charging signal to the battery. Therefore, with reference to the foregoing process, the first DC-DC conversion circuit and the second DC-DC conversion circuit may simultaneously charge the battery in a first charging mode (for example, fast charging). Compared with a conventional technology in which only one of a BUCK circuit or an SC circuit is used to charge the battery in a charging scenario, the solution provided in this embodiment of this application may simultaneously reuse, in a fast charging scenario, two DC-DC conversion circuits to charge the battery, so that a power of high-power fast charging can be increased.

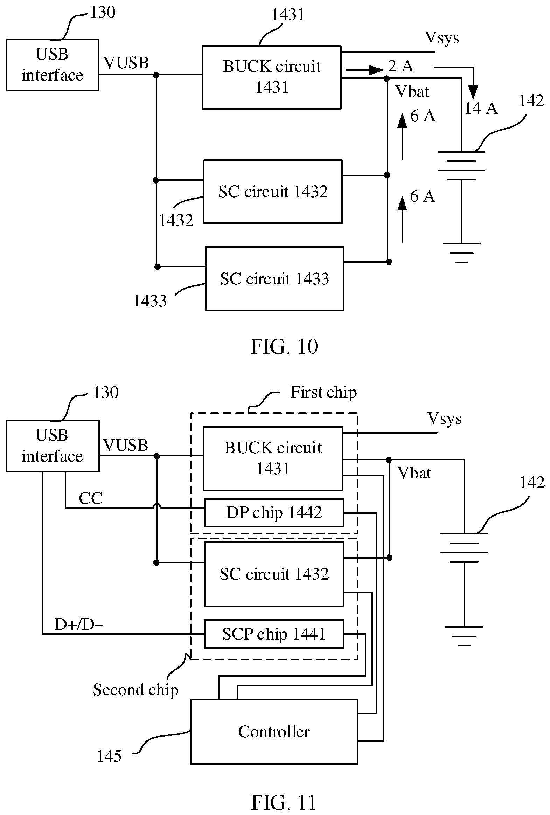

With reference to FIG. 9, for example, the first DC-DC conversion circuit 1431 includes a BUCK circuit, and the second DC-DC conversion circuit 1432 includes an SC circuit. In the first charging mode, when the BUCK circuit 1431 and the SC circuit 1432 simultaneously output a charging signal to Vbat, for example, the BUCK circuit 1431 outputs a current of 2 A (a battery voltage of 5 V) to Vbat, and the SC circuit 1432 outputs a current of 6 A (a battery voltage of 5 V) to Vbat, because the BUCK circuit 1431 and the SC circuit 1432 are directly connected to Vbat in a wired AND manner, fast charging with a charging power of 40 W can be implemented (compared with a charging power of 30 W of fast charging that is implemented by using only the SC circuit, the charging power is increased by 10 W). Further, as shown in FIG. 10, when the charging circuit further includes a third DC-DC conversion circuit 1433 (the third DC-DC conversion circuit 1433 may be a voltage non-regulated direct current conversion circuit, for example, the SC circuit 1432 in FIG. 11), in the first charging mode, the third DC-DC conversion circuit 1433 is also configured to perform voltage conversion on the voltage at the power supply end VBUS, to output a third charging signal to the battery 142. Therefore, in the first charging mode, when the BUCK circuit 1431, the SC circuit 1432, and the SC circuit 1433 simultaneously output a charging signal to Vbat, for example, the BUCK circuit 1431 outputs a current of 2 A (a battery voltage of 5 V) to Vbat, and the SC circuits 1432 and 1433 output a current of 6 A (a battery voltage of 5 V) to Vbat, because the BUCK circuit 1431, the SC circuit 1432, and the SC circuit 1432 are directly connected to Vbat in a wired AND manner, fast charging with a charging power of 70 W can be implemented (compared with a charging power of 60 W of fast charging that is implemented by using only two SC circuits, the charging power is increased by 10 W). That is, in the fast charging scenario, in comparison with a conventional technology, a power of the BUCK circuit 1431 may be reused, instead of leaving the BUCK circuit 1431 idle and using only an output power of the SC circuit. In this way, an output of a higher power can be implemented.

Further, to implement control on the DC-DC conversion circuits, the charging circuit 143 further includes a first protocol chip 1441, where the first protocol chip 1441 is coupled to a controller 145, and the at least two direct current-direct current DC-DC conversion circuits (1431, 1432) are further coupled to the controller 145. When the first protocol chip 1442 is coupled to the charger, the controller is specifically configured to: when the first protocol chip 1441 determines that the charger supports the first charging mode, control the first DC-DC conversion circuit 1431 to output the first charging signal to the battery, and control the second DC-DC conversion circuit 1432 to output the second charging signal to the battery. For example, when the first DC-DC conversion circuit 1431 uses a BUCK circuit, and the second DC-DC conversion circuit 1432 uses an SC circuit, the first protocol chip 1441 may be an SCP chip. The first protocol chip 1441 is configured to negotiate with the charger according to an SCP charging protocol, to determine that the charger supports the first charging mode.

In addition, in embodiments of this application, one of the at least two DC-DC conversion circuits may alternatively be used to charge the battery. For example, in a second charging mode, the first DC-DC conversion circuit 1431 in the at least two DC-DC conversion circuits is configured to output the first charging signal to the battery 142, and the second DC-DC conversion circuit 1432 is configured to stop performing voltage conversion on the voltage at the power supply end. To implement control on the DC-DC conversion circuits, the charging circuit 143 further includes a second protocol chip 1442. The second protocol chip 1442 is configured to be coupled to a controller 145, and the at least two direct current-direct current DC-DC conversion circuits are further coupled to the controller 145. For example, the first DC-DC conversion circuit 1431 may be a BUCK circuit, and the second protocol chip 1442 may be a PD chip. The second protocol chip 1442 is configured to: when negotiating with the charger according to a PD charging protocol to determine that the charger supports the second charging mode, control the first DC-DC conversion circuit 1431 to output the first charging signal to the battery, and control the second DC-DC conversion circuit 1432 to stop performing voltage conversion on the voltage of the power supply end.

In addition, the controller 145 may be a logic circuit such as a processor or an MCU that is separately disposed, or may be integrated into the processor 110 or the power management module 141 shown in FIG. 1 for implementation. It should be noted that the first protocol chip 1441 and the second protocol chip 1442 each may be a logic circuit such as a processor or an MCU that is separately disposed, or may be integrated into the processor 110 or the power management module 141 shown in FIG. 1 for implementation. Certainly, to save an external analog device (for example, a logic circuit such as an MCU), as shown in FIG. 11, the first protocol chip 1441 and the second DC-DC conversion circuit 1432 may alternatively be integrated into a same second chip, and the second protocol chip 1442 and the first DC-DC conversion circuit 1431 may alternatively be integrated into a same first chip.

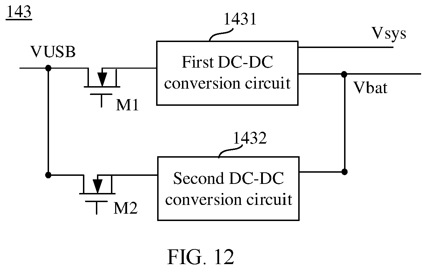

In some examples, to avoid supplying a voltage to a DC-DC conversion circuit that does not work, with reference to FIG. 12, the charging circuit 143 further includes a plurality of control switches M (M1, M2), where the control switch is connected in series between the power supply end VBUS and the DC-DC conversion circuit. For example, with reference to FIG. 12, a control switch M1 is connected in series between the power supply end VBUS and the first DC-DC conversion circuit 1431; and a control switch M2 is connected in series between the power supply end VBUS and the second DC-DC conversion circuit 1432. In this case, in the first charging mode, the control switch M1 connected in series to the power supply end VBUS and the first DC-DC conversion circuit 1431 is configured to be in an on state, and the control switch M2 connected in series to the power supply end VBUS and the second DC-DC conversion circuit 1432 is configured to be in an on state. In the second charging mode, the control switch connected in series to the power supply end VBUS and the first DC-DC conversion circuit 1431 is configured to be in an on state, and the control switch M2 connected in series to the power supply end VBUS and the second DC-DC conversion circuit 1432 is configured to be in an off state. Usually, control ends of the control switches M1 and M2 may be connected to the controller 145 in FIG. 9. In addition, the controller 145 is specifically configured to: when the first protocol chip 1441 determines that the charger supports the first charging mode (supports the SCP charging protocol), control M1 and M2 to be turned on; and when the second protocol chip 1441 determines that the charger supports the first charging mode (supports the PD charging protocol), control M1 to be turned on and M2 to be turned off.

An embodiment of this application further provides a chip, where the chip includes the charging circuit provided in the foregoing embodiments; and the chip further includes a pin configured to couple a charger and a battery. In some examples, the chip includes the charging management module shown in FIG. 1. In addition, it should be noted that, devices such as a capacitor and an inductor need to be implemented by using a large-sized plate or a wire, and are not conducive to being integrated into a chip. Therefore, the chip may alternatively include only a switching device in the charging circuit, and devices such as a capacitor and an inductor of the charging circuit are coupled outside the chip by using a pin P. In addition, for a specific connection relationship and a working principle of each internal structure in the chip, refer to the detailed descriptions in the foregoing embodiments. Details are not described herein again.

Although this application is described herein with reference to embodiments, in a process of implementing this application that claims protection, a person skilled in the art may understand and implement other variations of the disclosed embodiments by viewing the accompanying drawings, disclosed content, and appended claims. In the claims, the word "comprising" does not exclude another component or another step, and "a" or "one" does not exclude a case of plurality. Some measures are recorded in dependent claims that are different from each other, but this does not mean that these measures cannot be combined to produce good effect.

The foregoing has described embodiments of this application. The foregoing descriptions are examples, are not exhaustive, and are not limited to the disclosed embodiments. Many modifications and changes are apparent to a person of ordinary skill in the art without departing from the scope and spirit of the illustrated embodiments. The selection of terms used in this specification is intended to best explain the principles of embodiments, practical applications, or improvements to technologies in the market, or to enable another person of ordinary skill in the art to understand embodiments disclosed in this specification.

## Claims

1. A charging circuit, comprising at least two direct current-direct current DC-DC conversion circuits coupled between a power supply end and a charging end, wherein the power supply end is configured to be coupled to a charger, and the charging end is configured to be coupled to a battery;
a voltage input end of the DC-DC conversion circuit is coupled to the power supply end, a voltage output end of the DC-DC conversion circuit is coupled to the charging end, and the at least two DC-DC conversion circuits comprise a first DC-DC conversion circuit and a second DC-DC conversion circuit; and
the first DC-DC conversion circuit is configured to perform voltage conversion on a voltage at the power supply end, to output a first charging signal to the battery, the second DC-DC conversion circuit is configured to perform voltage conversion on the voltage at the power supply end, to output a second charging signal to the battery, the first DC-DC conversion circuit comprises a voltage regulated direct current conversion circuit, and the second DC-DC conversion circuit comprises a voltage non-regulated direct current conversion circuit.

2. The charging circuit according to claim 1, further comprising:
the first DC-DC conversion circuit in the at least two DC-DC conversion circuits is configured to output the first charging signal to the battery, and the second DC-DC conversion circuit is configured to stop performing voltage conversion on the voltage at the power supply end.

3. The charging circuit according to claim 1 or 2, further comprising a first protocol chip, wherein
the first protocol chip is coupled to a controller, and the at least two direct current-direct current DC-DC conversion circuits are further coupled to the controller; and
when the first protocol chip is coupled to the charger, the controller is specifically configured to: when the first protocol chip determines that the charger supports a first charging mode, control the first DC-DC conversion circuit to output the first charging signal to the battery, and control the second DC-DC conversion circuit to output the second charging signal to the battery.

4. The charging circuit according to claim 3, wherein the first protocol chip and the second DC-DC conversion circuit are integrated into a same chip.

5. The charging circuit according to claim 3 or 4, wherein the first protocol chip is configured to negotiate with the charger according to an SCP charging protocol, to determine that the charger supports the first charging mode.

6. The charging circuit according to claim 2, further comprising a second protocol chip, wherein the second protocol chip is configured to be coupled to a controller, and the at least two direct current-direct current DC-DC conversion circuits are further coupled to the controller; and
when the second protocol chip is coupled to the charger, the control circuit is specifically configured to: when the second protocol chip determines that the charger supports a second charging mode, control the first DC-DC conversion circuit to output the first charging signal to the battery, and control the second DC-DC conversion circuit to stop performing voltage conversion on the voltage at the power supply end.

7. The charging circuit according to claim 6, wherein the second protocol chip and the first DC-DC conversion circuit are integrated into a same chip.

8. The charging circuit according to claim 6 or 7, wherein the second protocol chip is configured to negotiate with the charger according to a PD charging protocol, to determine that the charger supports the second charging mode.

9. The charging circuit according to any one of claims 1 to 8, wherein the at least two DC-DC conversion circuits further comprise a third DC-DC conversion circuit; and
the third DC-DC conversion circuit is configured to perform voltage conversion on the voltage at the power supply end, to output a third charging signal to the battery, and the third DC-DC conversion circuit comprises the voltage non-regulated direct current conversion circuit.

10. The charging circuit according to any one of claims 1 to 9, wherein the voltage regulated direct current conversion circuit comprises at least any one of the following: a buck-boost BUCK-BOOST circuit, a buck BUCK circuit, and a boost BOOST circuit.

11. The charging circuit according to any one of claims 1 to 10, wherein the voltage non-regulated direct current conversion circuit comprises a switched capacitor SC circuit.

12. The charging circuit according to claim 2, further comprising a plurality of control switches, wherein the control switch is connected in series between the power supply end and the DC-DC conversion circuit; and
a control switch connected in series to the power supply end and the first DC-DC conversion circuit is configured to be in an on state, and a control switch connected in series to the power supply end and the second DC-DC conversion circuit is configured to be in an on state; or
a control switch connected in series to the power supply end and the first DC-DC conversion circuit is configured to be in an on state, and a control switch connected in series to the power supply end and the second DC-DC conversion circuit is configured to be in an off state.

13. A chip, wherein the chip comprises the charging circuit according to any one of claims 1 to 12; and the chip further comprises a pin configured to couple a charger and a battery.

14. The chip according to claim 13, wherein the chip comprises a charging management module.

15. An electronic device, comprising the charging circuit according to any one of claims 1 to 12 or the chip according to claim 13 or 14.

16. The electronic device according to claim 15, further comprising:
a wireless charging coil, a receiving circuit, and a battery, wherein the wireless charging coil is connected to the receiving circuit, the receiving circuit is connected to a power supply end of the charging circuit or the chip, and the battery is connected to a charging end of the charging circuit or the chip.

17. The electronic device according to claim 15, further comprising: a USB interface and a battery, wherein the USB interface is connected to a power supply end of the charging circuit or the chip, and the battery is connected to a charging end of the charging circuit or the chip.

18. The electronic device according to any one of claims 15 to 17, further comprising: an overvoltage protection circuit, wherein
the overvoltage protection circuit comprises:
a diode and a protection switch, wherein an anode of the diode is coupled to the ground, and a cathode of the diode is coupled to the power supply end; and the protection switch is connected in series between the power supply end and the ground.

19. The electronic device according to any one of claims 15 to 18, wherein the electronic device further comprises a load circuit; and a first DC-DC conversion circuit further comprises an isolation switch; and
a voltage output end of the first DC-DC conversion circuit is coupled to the load circuit, and the isolation switch is further disposed between the voltage output end of the first DC-DC conversion circuit and the charging end.
